# EUROPÄISCHE PATENTSCHRIFT

(11) **EP 0 684 799 B1**
(45) Veröffentlichungstag und Bekanntmachung des Hinweises auf die Patenterteilung: **23.07.1997**
(21) Anmeldenummer: 94906088.3
(22) Anmeldetag: 17.02.1994
(51) Int. Cl.: A61C 17/00, B04B 1/00

(54) **VERFAHREN UND ABSCHEIDER ZUM TRENNEN TRANSPORTIERENDER SAUGLUFT VON EINEM TRANSPORTIERTEN MEDIUM**
PROCESS AND SEPARATOR FOR REMOVING CONVEYING SUCTION AIR FROM A CONVEYED MEDIUM
PROCEDE ET APPAREIL POUR LA SEPARATION DE L'AIR ASPIRE TRANSPORTEUR ET D'UN FLUIDE TRANSPORTE

(30) Priorität: 18.02.1993 AT 304/93; 10.03.1993 AT 452/93; 02.07.1993 AT 1304/93; 19.11.1993 AT 2349/93
(43) Veröffentlichungstag der Anmeldung: 06.12.1995
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Hofinger, Engelbert, DDr.
(86) Internationale Anmeldenummer: AT9400017
(87) Internationale Veröffentlichungsnummer: WO9418903

(56) Entgegenhaltungen:
- EP-A- 0 432 142
- DE-A- 3 737 002

## Beschreibung

Die Erfindung betrifft ein Verfahren und einen Abscheider zum Trennen transportierender Saugluft von einem transportierten fließfähigen Medium, insbesondere von einem aus dem Mund eines Patienten abgesaugten dentalen Flüssigkeit-Feststoffgemisch, gemäß dem Oberbegriff der Patentansprüche 1 und 2.

Einen derartigen Abscheider beschreibt die EP-A 432 142. Dort werden aus zwei verschiedenen Feststoff-Flüssigkeitsgemischen, von denen eines aus der Speischale und das andere aus der Absaugeinrichtung stammt, die Feststoffe mit Hilfe einer Zentrifuge gemeinsam in einen Sammelbehälter abgeschieden. Aus dem Unterdruckbereich wird das Gemisch mittels einer Flügelradpumpe ausgetragen, deren Gehäuse eine Austrittsöffnung in der Umfangswand aufweist, die mit einem Rückschlagventil versehen ist. Die Flügelradpumpe fördert dabei ein Gemisch, aus dem wesentliche Feststoffanteile bereits zuvor sedimentiert wurden, sodaß das durch die Austrittsöffnung austretende Gemisch nur noch wenig Feststoffe enthält und die Austrittsöffnung nicht allzu groß zu sein braucht.

Aus der DE-C 38 04 299 ist ein Abscheider bekannt, dessen Gehäuse einen Unterdruckbereich und einen Normaldruckbereich aufweist. Eine Vollmantelzentrifuge übergreift die beiden unterschiedlichen Druckbereiche und ist an der im Normaldruckbereich liegenden Oberkante mit einem nach innen weisenden Sperrflansch versehen. An dem im Unterdruckbereich liegenden trichterförmigen Boden der Zentrifuge ist ein Auffangbehälter befestigt, aus dem beim Einschalten der Zentrifuge ein Wasserring hochsteigt und sich an den zylindrischen Mantel anlegt. Ein mit der Zentrifuge angetriebener hohlzylindrischer Drehteil weist innere Flügel und einen nach außen gerichteten Trennflansch auf. Der obere Endbereich des hohlzylindrischen Drehteiles ist in einem im Gehäuse angeordneten Gleitdichtring gelagert. Zwischen dem Trennflansch des Drehteiles und dem Mantel der Zentrifuge liegt ein Ringspalt, der den Übergang vom Unterdruckbereich in den Normaldruckbereich darstellt, wobei der hochgestiegene Wasserring, in den der Trennflansch eingetaucht ist, im Bereich des Ringspaltes eine mitrotierende Rückströmsperre bildet. Mittels des Drehteiles wird das Gemisch aus Flüssigkeit und Feststoffen an den Zentrifugenmantel gepreßt, an dem eine Trennung erfolgt, wobei die feststofffreie Flüssigkeit axial durch die Rückstromsperre hindurch wandert und über den Sperrflansch verdrängt wird. Sobald die Zentrifuge stillgesetzt wird, fließt der Wasserring samt den abgeschiedenen Feststoffen in den Auffangbehälter zurück, und die Abdichtung der beiden unterschiedlichen Druckbereiche geht verloren. Da der Unterdruck der Saugpumpe meist auch für verschiedene andere Funktionen am Behandlungsplatz erforderlich ist, ist es notwendig, den Drehteil in Betrieb zu halten, unabhängig davon, ob ein Gemisch abgesaugt wird oder nicht. Daher muß auch die Zentrifuge samt Sammelbehälter einschließlich aller abgeschiedenen Feststoffe ständig mitrotieren.

Die Erfindung hat es sich daher zur Aufgabe gestellt, einen Abscheider der eingangs genannten Art zu verbessern und möglichst einfach und platzsparend auszubilden, wobei die Rückstromsperre ohne dauernde Rotation gegeben ist. Bei einem erfindungsgemäßen Verfahren wird dementsprechend das durch die Rotation beschleunigte Medium durch eine ringförmige, entgegen der Austragrichtung beaufschlagte Rückströmsperre allseits nach außen hindurchgedrückt. Bei einem erfindungsgemäßen Abscheider sind zu diesem Zweck der Auslaß für das fließfähige Medium und die in Schließrichtung beaufschlagte Rückströmsperre ringförmig rund um das Austragelement angeordnet. Die Rückstromsperre ist bevorzugt durch eine Rückschlagventilanordnung gebildet, die einen Träger, ein am Träger angeordnetes, den Auslaß überbrückendes Ventilelement und ein an der anderen Seite des Auslasses angeordnetes Anlageelement aufweist.

Bei Verwendung des Abscheiders treten mehrere verschiedene Betriebszustände auf, in denen die Funktionsfähigkeit natürlich gewahrt sein muß. In einem ersten Betriebszustand ist bei stillstehendem Austragelement die Sauganlage eingeschaltet und die Rückschlagventilanordnung daher zusätzlich zur ventileigenen Beaufschlagung durch den Unterdruck der Saugpumpe beaufschlagt, sodaß ein Lufteintritt aus dem äußeren Normaldruckbereich sicher verhindert wird. Diese zusätzliche Beaufschlagung ist auch in einem zweiten Betriebszustand wirksam, in dem das Austragelement angetrieben ist. Wird Gemisch zugeführt, so wird dies radial beschleunigt und durch die Rückschlagventilanordnung hindurch nach außen gedrückt. In einem dritten Betriebszustand kann die Sauganlage abgeschaltet und das Austragelement dennoch in Betrieb sein, wenn beispielsweise ein von einer Speischale kommendes Gemisch, das keine Saugluft enthält, durch das Austragelement hindurchgeführt werden soll. Hier sorgt die ventileigene Schließbeaufschlagung dafür, daß das Material die Rückschlagventilanordnung aufdrücken muß. Diese zumindest geringe, ventileigene Schließbeaufschlagung ist notwendig, um bei einem Einschalten der Sauganlage nicht Luft aus dem Normaldruckbereich eintreten zu lassen.

Da die Abdichtung sowohl bei Stillstand, als auch bei der Rotation des Austragelementes allein gewahrt ist, kann der erfindungsgemäße Abscheider seine Funktion in allen drei Betriebszuständen voll erfüllen. Erst die Passage des durch die Rotation beschleunigten FlüssigkeitsFeststoffgemisches öffnet die Rückströmsperre, die sich nach dem Durchtritt des Gemisches wieder schließt. Das in einen unter Normaldruck stehenden Ringraum des Gehäuses austretende Medium fließt dort unter der Wirkung der Schwerkraft nach unten. Bevorzugt ist der untere Teil des Normaldruckbereiches trichterartig ausgebildet, sodaß ein über den Umfang des Gehäuses vorstehender Anschlußstutzen vermieden wird.

Die Rückschlagventilanordnung umfaßt insbesondere eine das Austragelement umgebende Ventillippe od. dgl. aus einem elastischen Material, die in den Träger eingesetzt, eingeklemmt, angelenkt oder bei geeigneter Auswahl des Materials des Trägers auch über einen verjüngten Umfangsbereich am Träger angeformt sein kann. Die Ventillippe ist bevorzugt als kegelstumpfförmiger oder zylindrischer Dichtsteg ausgebildet, der aufgrund seiner Elastizität beim Austritt des abgetrennten Mediums aufgeweitet wird. Der Dichtsteg ist bevorzugt von einem Stützsteg aus insbesondere elastischem Material nach außen abgestützt. Die beiden Stege können daher auch an einem einstückigen Ringkörper ausgebildet sein, der in den Träger eingesetzt oder daran angeformt ist.

Der Auslaß und die Rückschlagventilanordnung können auch gleichmäßig über den Umfang verteilte Abschnitte umfassen, sodaß mehrere kleine Ventilklappen an mehreren Durchtrittsöffnungen vorgesehen sind, die jeweils durch eine Feder von außen gegen das Anlageelement beaufschlagt sind.

In einer bevorzugten, ersten Ausführung ist vorgesehen, daß der Auslaß und die Rückschlagventilanordnung in einer das angetriebene Austragelement umgebenden, gehäusefesten Trennwand angeordnet sind. Somit liegt die Rückschlagventilanordnung stationär in der Trennwand, die den Unterdruckbereich vom Normaldruckbereich abteilt und einen Hohlraum umschließt, dessen Durchmesser sich zum Auslaß hin vergrößert.

In einer weiteren Ausführung ist vorgesehen, daß der Auslaß und die Rückschlagventilanordnung im angetriebenen Austragelement angeordnet sind. Die auftretende Fliehkraft wirkt der Schließbeaufschlagung entgegen, sodaß der Durchtritt des Gemisches erleichtert ist. Um das Öffnungsbestreben durch die Fliehkraft zu verringern, das zum Eintritt von Außenluft führen könnte, ist der Stützsteg bevorzugt C-förmig und weist mit seiner konkaven Seite nach außen. Dies führt bei Rotation des Austragelementes aufgrund der auf den Stützsteg einwirkenden Fliehkraft zu einem Kniehebeleffekt, da die nach außen strebende Wölbung den Anpreßdruck des Dichtsteges. Wird Gemisch ausgetragen, so knickt der C-förmige Stützsteg nach innen ein, wobei Luft aus dem zwischen den Steg und den Stützsteg gegebenen Raum durch mindestens ein Loch im Stützsteg entweichen kann. Um die Passage des Gemisches gegebenenfalls zu erleichtern, kann vorgesehen sein, daß der Raum nicht nach außen, sondern über einen Kanal nach innen in den Unterdruckbereich offen ist, sodaß auch in diesem Raum ein Unterdruck erzeugt wird. Der Kanal weist bevorzugt einen geringen Querschnitt auf und ist gegebenenfalls mehrfach abgewinkelt, um eine Unterdruckdifferenz zu erzielen, die sich als vorteilhaft für die exakte Funktion erwiesen hat.

Wenn die Rückschlagventilanordnung mit dem Austragelement mitrotiert, können in einer anderen Ausführung die Ventillippe bzw. die Ventilklappen gegen eine Radialebene geringfügig so geneigt sein, daß ihre Anpressung gegen das Anlageelement bei Rotation erhöht wird. Eine Kombination der beiden Ausführungen ist ebenfalls denkbar, d.h. die Ventillippe bzw. die Ventilklappen können am angetriebenen Austragteil vorgesehen und an einer Dichtfläche des gehäusefesten Anlageelementes anliegen. Es ist aber auch denkbar, die Ventillippe bzw. die Ventilklappen an der gehäusefesten Trennwand anzuordnen und die Dichtfläche am angetriebenen Austragteil vorzusehen.

Als Austragelement sieht eine weitere bevorzugte Ausführung einen Zentrifugenbehälter mit konvexer Erzeugenden vor. Der Auslaß kann dann in einer ersten Variante am größten Durchmesser in Form eines Austrittsringspaltes vorgesehen sein. Dadurch ergibt sich ein maximaler Öffnungsquerschnitt des Auslasses. Diese Ausführung ist sowohl für gehäusefeste als auch mitrotierende Rückschlagventilanordnungen geeignet. Das Austragelement kann in einer zweiten Variante aber auch an der Nabe eines Zentrifugenbehälters vorgesehen sein, der im Normaldruckbereich angeordnet ist. In dieser Ausführung ist der Auslaß dann durch einen Eintrittsringspalt gebildet, in dem die mitrotierende Rückschlagventilanordnung vorgesehen ist. Wenn die Rückschlagventilanordnung stationär in der gehäusefesten Trennwand vorgesehen ist, kann das angetriebene Austragelement auf ein Flügelrad oder dergleichen beschränkt sein, dessen Flägel eine konvexe Außenkontur aufweisen.

In einer weiteren bevorzugten Ausführung ist vorgesehen, daß die zwischen dem Gehäuse und dem Austragelement angeordnete Dichtung mindestens ein am Gehäuse elastisch abgestütztes gegen das Austragelement beaufschlagtes Gleitelement aufweist. Die beiden Funktionen einer Gleitdichtung sind dadurch aufgeteilt und es kann als Gleitelement ein Gleitlager aus einem besonders geeigneten Material verwendet werden, das von einem Element aus elastischem Material beaufschlagt wird.

In einer bevorzugten Ausführung weist das Gehäuse ein zentrales, gegebenenfalls von der Antriebswelle des Austragelementes durchsetztes Saugluftauslaßrohr auf, das von einem insbesondere spiralig geführten Gemischeinlaßraum umgeben ist. In diesem Fall ist insbesondere vorgesehen, daß im Austragelement in Verlängerung des Saugluftauslaßrohres ein nach außen gerichteter Leitflansch für das Gemisch angeordnet ist. Zwischen dem Saugluftauslaßrohr und dem Leitflansch ist eine zweite Gleitdichtung ausgebildet, die ein am Gehäuse elastisch abgestütztes, zweites Gleitelement aufweist. Die zweite Gleitdichtung vermeidet dabei den unmittelbaren Durchgang der Saugluft aus dem Gemischeinlaßraum in das Saugluftauslaßrohr.

Die bzw. jede Gleitdichtung weist insbesondere in einer Radialebene liegende Dichtflächen auf. Als Gleitelement läßt sich dadurch ein Ring aus einem reibungsarmen Material verwenden, der in einem am Gehäuse elastisch aufgehängten Träger angeordnet ist. Als Material eignet sich beispielsweise Polytetrafluorethylen, Keramik, usw., wobei die mit dem Zentralfugenbehälter mitrotierende Dichtfläche an einem Metallring vorgesehen sein kann. In der bevorzugten Ausführung mit zwei Gleitdichtringen sind diese vorteilhaft an einem gemeinsamen Träger aufgehängt, der das Saugluftauslaßrohr aufweist. Für die elastische Aufhängung dieser Ausführung des Trägers sind beispielsweise den Träger am Gehäuse haltende elastische Ringe vorgesehen und die elastische Beaufschlagung gegen den Zentrifugenbehälter erfolgt vorzugsweise mittels vorgespannter Druckfedern, die zwischen dem Gehäuse und dem Träger abgestützt sind.

Nachstehend wird nun die Erfindung anhand der Figuren der beiliegenden Zeichnung näher beschrieben, ohne darauf beschränkt zu sein. Es zeigen:
- Fig. 1: einen Längsschnitt durch ein erstes Ausführungsbeispiel der Erfindung,
- Fig. 2: einen Längsschnitt durch ein zweites Ausführungsbeispiel,
- Fig. 3: einen Längsschnitt durch ein drittes Ausführungsbeispiel,
- Fig. 4: einen Längsschnitt durch ein viertes Ausführungsbeispiel,
- Fig. 5: einen Teillängsschnitt durch ein fünftes Ausführungsbeispiel,
- Fig. 6: einen Längsschnitt durch ein sechstes Ausführungsbeispiel,
- Fig. 7: einen Längsschnitt durch ein siebtes Ausführungsbeispiel, und
- Fig. 8: einen Längsschnitt durch ein achtes Ausführungsbeispiel.

Ein Abscheider weist ein Gehäuse 1 auf, das einen Unterdruckbereich 6 und einen Normaldruckbereich 7 umfaßt, und in dem ein von einem Motor 2 angetriebenes, insbesondere durch einen Zentrifugenbehälter gebildetes Austragelement 4 als Trennelement für die beiden Bereiche 6,7 angeordnet ist. In den Unterdruckbereich 6 mündet ein Gemischeinlaß 8 für fließfähiges Medium, beispielsweise ein aus dem Mund eines Patienten abzusaugendes Flüssigkeit-Feststoffgemisch, wobei die abgetrennte Saugluft über einen zentralen Luftauslaß 9 zu einer nicht gezeigten Unterdruckquelle, insbesondere einer Saugpumpe geleitet wird. Der Zentrifugenbehälter besitzt eine auf der Antriebswelle 3 des Motors 2 angeordnete Nabe 13, von der in Axialebenen mehrere Stützstege 14 abstehen. Diese tragen zwei Behälterabschnitte 26,11, zwischen denen als Auslaß 5 vom Unterdruckbereich 6 in den Normaldruckbereich 7 ein Ringspalt vorgesehen ist. Dem Auslaß 5 ist eine mitrotierende Rückströmsperre in Form eines Rückschlagventilanordnung 10, beispielsweise eine gegen eine Anlagefläche vorgespannte, ringförmige Lippe, Klappe, Schürze oder dergleichen Ventilklappe aus elastischem Material zugeordnet, die bei arbeitender Saugpumpe zusätzlich durch deren Unterdruck in Schließstellung beaufschlagt ist. Im Normaldruckbereich 7 fließt das durch die Rückschlagventilanordnung 10 durchgedrückte Gemisch unter Schwerkraft allseitig nach unten, sodaß eine äußerst kompakte Anordnung erreicht wird, da kein seitlich, über das Gehäuse 1 vorstehender Abflußkanal benötigt wird. Der Durchmesser des Gehäuses beschränkt sich somit auf den Durchmesser des Austragelementes 4 zuzüglich des umgebenden ringförmigen Sammelraumes 29 des Normaldruckbereiches 7.

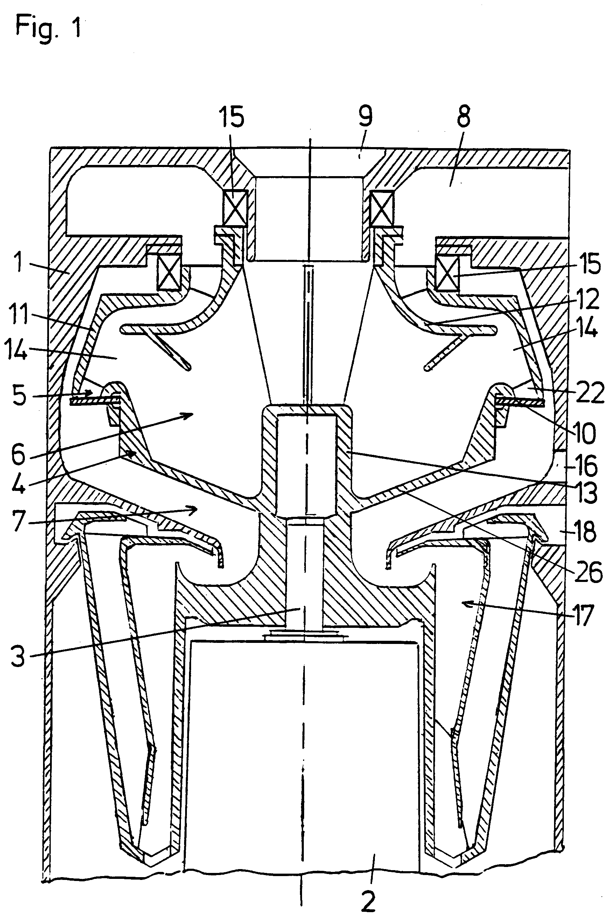

In der Ausführung nach Fig. 1 ist der Auslaß 5 am größten Durchmesser des Austragelementes 4 zwischen einem von der Nabe 13 sich topfartig erstreckenden ersten, unteren Behälterabschnitt 26 und einem zweiten, oberen dem Behälterabschnitt 11 ausgebildet. Am größten Umfang des topfartigen Behälterabschnittes 26 ist die ringförmige Ventillippe, Ventilklappe od.dgl. aus elastischem Material fixiert, deren Außenrandbereich am unteren Rand des zweiten, oberen Behälterabschnittes 11 anliegt, der sich zur Ventillippe, Ventilklappe hin erweitert. Als Leitfläche und Trennwand gegen den zentralen Luftauslaß hin dient ein flanschartiger Abschnitt 12, der zusätzliche Luftleitflügel aufweist und ebenfalls an den Stützstegen 14 fixiert ist. Das über den Gemischeinlaß 8 zugeführte Gemisch wird aufgrund der Rotation des Austragelementes 4 ausgezeichnet entmischt, wobei das fließfähige, insbesondere Feststoffe enthaltende Medium gegen die Ventillippe bzw. Ventilklappe gedrückt wird, die sich dadurch öffnet und das fließfähige Medium in den Normaldruckbereich 7 austreten läßt. Die leichtere und wesentlich geringere Fliehkräften ausgesetzte Luft wird über den trennenden Behälterabschnitt 12 nach innen zum Luftauslaß 9 gesaugt, wobei der von der Saugpumpe erzeugte Unterdruck die Ventillippe bzw. Ventilklappe so lange geschlossen hält, bis sie durch eine ausreichende Menge von fließfähigem Medium aufgedrückt wird.

Zwischen den Behälterabschnitten 11 und 12 und dem Gehäuse 1 sind Dichtungen 15 vorgesehen, die einerseits den Unterdruckbereich 6 gegen den Normaldruckbereich 7 und andererseits den direkten Durchgang vom Gemischeinlaß 8 zum Luftauslaß 9 dichten.

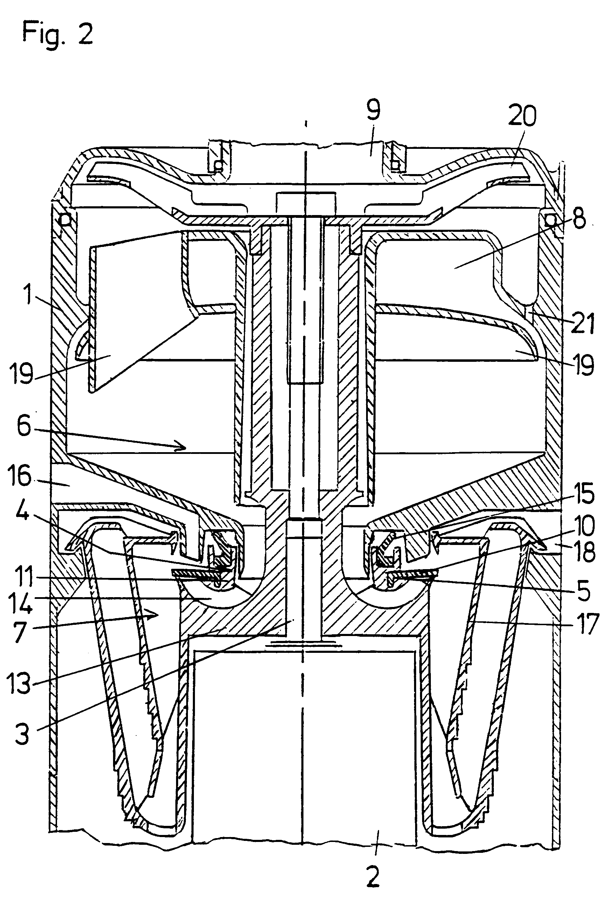

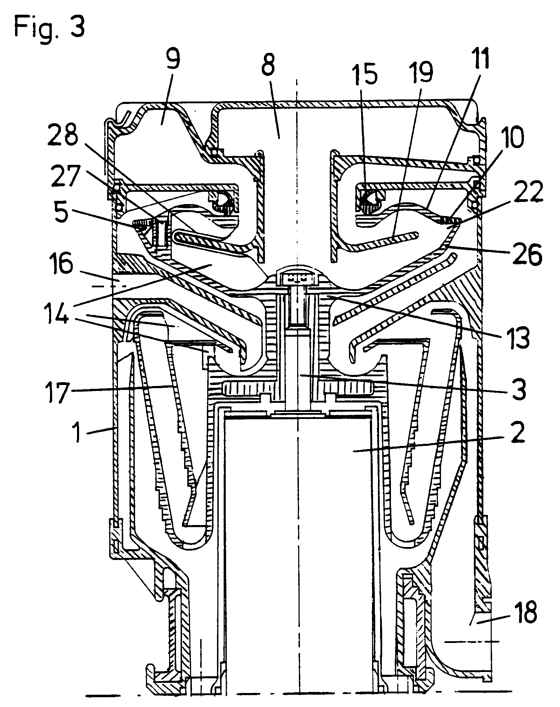

Das in den Normaldruckbereich 7 austretende Medium kann in beliebiger Weise weiterbehandelt werden. In zahnärztlichen Abscheidern ist bevorzugt eine zweite Zentrifuge 17 (Fig. 2,3) vorgesehen, die ebenfalls vom Motor 2 angetrieben wird und der über einen weiteren Gemischeinlaß 16 der Abfluß einer Speischale zugeführt werden kann. Die Zentrifuge 17 trennt die enthaltenen Feststoffe von der Flüssigkeit in bekannter Weise, die die Zentrifuge über einen Flüssigkeitsauslaß 18 verläßt.

Fig. 2 zeigt eine Ausführung, in der das Austragelement 4 am Eingang in die im Normaldruckbereich 7 liegende Zentrifuge 17 vorgesehen ist. Der Auslaß 5 vom Unterdruckbereich 6 in den Normaldruckbereich 7 ist als Einlaßringspalt in die Zentrifuge 17 zwischen der eine nach außen führende Leitfläche aufweisenden Nabe 13 und dem als Austragelement 4 dienenden Behälterabschnitt 11 vorgesehen, der wiederum mit der Nabe 13 über die Stützstege 14 verbunden ist. Der Behälterabschnitt 11 trägt die Rückschlagventilanordnung 10, die wiederum durch die ringförmige Ventillippe bzw. Ventilklappe aus elastischem Material gebildet ist, und die Dichtung 15 zum Gehäuse 1. Im Unterdruckbereich 6 sind zur besseren Trennung des über den Gemischeinlaß 8 tangential eintretenden Gemisches Umlenkflächen 19 vorgesehen, die eine Zyklonwirkung erzeugen, sodaß die abgetrennte Luft über den Luftauslaß 9 abgesaugt werden kann, während das fließfähige Medium entlang der Innenwand des Gehäuses 1 nach unten zum Auslaß 5 fließt. Unmittelbar vor dem Luftauslaß 9 ist noch ein Flügelrad 20 an der Antriebswelle 3 befestigt, das Reste des fließfähigen Mediums abtrennt und gegebenenfalls auch Schaum zerstört. Diese Anteile des fließfähigen Mediums fließen durch Öffnungen 21 nach unten ab.

In der Ausführung nach Fig. 3 ist der Auslaß 5 wiederum am größten Durchmesser des Austragelementes 4 vorgesehen und durch den Austrittsringspalt 22 zwischen den beiden Behälterabschnitten 26,11 gebildet. Die ringförmige Ventillippe bzw. Ventilklappe aus elastischem Material erstreckt sich annähernd in einer Radialebene zwischen dem topfartigen unteren Behälterabschnitt 26 und dem deckelartigen oberen Behälterabschnitt 11, und wird in dieser Ausführung somit vom auszutragenden Material nach oben aufgedruckt. Der Gemischeinlaß 8 ist zentral oberhalb des Austragelementes 4 angeordnet, und wird vom ringförmigen Luftauslaß 9 umgeben. Dadurch ist anstelle der beiden Dichtungen 15 in Fig. 1 und 2 nur eine einzige Dichtung zwischen dem Gehäuse 1 und oberen Drehteil 11 notwendig. Die flanschartige Luftumlenkfläche 19 ist gehäusefest und erstreckt sich von oben in das Austragelement 4, dessen beide Behälterabschnitte 26,11 mittels Schrauben 27 od.dgl. verbunden sind. Die an die Luftumlenkfläche 19 angrenzenden Randbereiche 28 der Stützstege 14 bestehen aus einem weichelastischen Material.

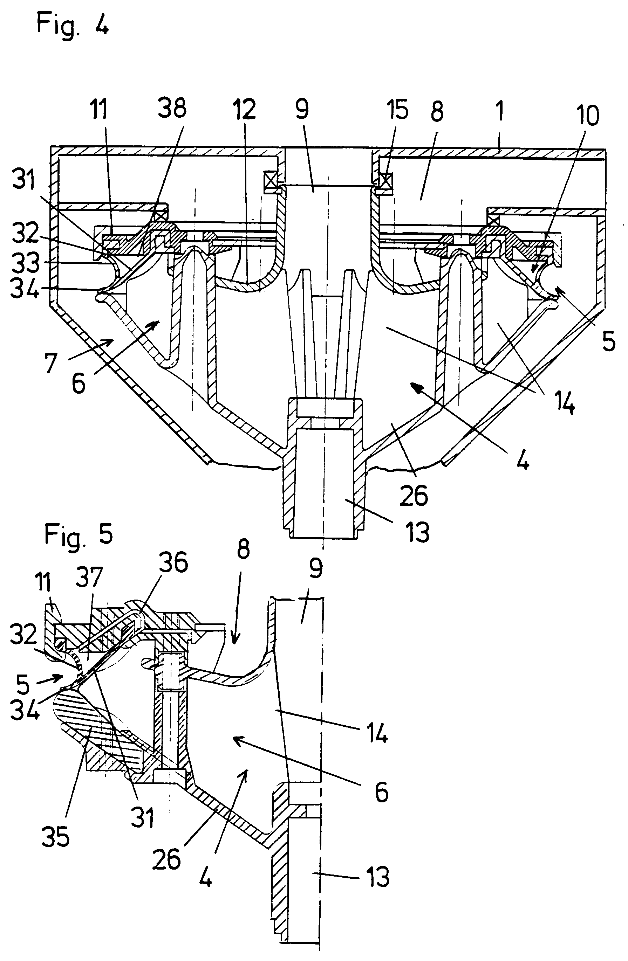

Auch in den Ausführungen nach Fig. 4 und 5 ist eine mit dem Austragelement 4 mitrotierende Rückströmsperre vorgesehen. Der am größten Durchmesser vorgesehene Austrittsringspalt 22 ist durch die Rückschlagventilanordnung 10 verschlossen, die durch den Unterdruck in Schließstellung beaufschlagt ist. Die Rückschlagventilanordnung 10 weist einen kegelstumpfförmig angeordneten Dichtsteg 31 aus einem elastischen Material, beispielsweise einem Elastomer auf, der sich schräg nach außen erstreckt und am deckelartigen, oberen Behälterabschnitt 11 fixiert ist. Der äußere Rand des Dichtsteges 31 bildet eine Dichtlippe 34, die gegen eine Anlagefläche am unteren Behälterabschnitt 11 drückt. Ein etwa C-förmiger, mit seiner konkaven Seite nach außen weisender Stützsteg 32, der bei Rotation des Austragelementes 4 natürlich ebenfalls der Fliehkraft unterliegt, wirkt ähnlich einem Kniehebel, indem er bei der Rotation verstärkt auf den Dichtsteg 31 drückt, sodaß trotz der Fliehkräfte der Dichtsteg 31 vom auszutragenden Gemisch aufgedrückt werden muß. Der Stützsteg 32 ist ebenfalls im zweiten Behälterabschnitt 11 fixiert, sodaß zwischen dem Dichtsteg 31 und dem Stützsteg 32 ein Raum eingeschlossen ist, der sich verändert, wenn sich die Stege 31, 32 bewegen. Der Dichtsteg 31 ist in sich begrenzt beweglich, wodurch das Anhaften von Gemisch vermieden wird. Im Austrittsringspalt 22 kann sich daher kein Material aufbauen, das den Auslaß 5 verschließen könnte.

In der Ausführung nach Fig. 4 ist der Raum 37 zwischen den Stegen 31, 32 nach außen belüftet, da der Stützsteg 32 Löcher 33 aufweist, sodaß Luft aus und eintreten kann, wenn sich der Raum 37 verändert.

In der Ausführung nach Fig. 5 ist der hier mit 38 bezeichnete Raum über einen Kanal 36 mit dem Unterdruckbereich verbunden, sodaß die Volumensänderung ebenfalls nicht behindert wird. Zusätzlich wirkt der Unterdruck der auf dem C-förmigen Stützsteg vorhandenen Fliehkraft entgegen, sodaß die Schließkraftverstärkung des Steges 31 bzw. seiner Dichtlippe 34 geringer ist. In beiden Fällen verhindert der Stützsteg 32, daß der Steg 31 aufgrund eines zu hohen Saugunterdruckes nach innen gestülpt werden könnte. Die Anlagefläche ist in der Ausführung nach Fig. 5 an einem Einsatzteil vorgesehen, das ebenfalls aus einem Elastomer bestehen kann.

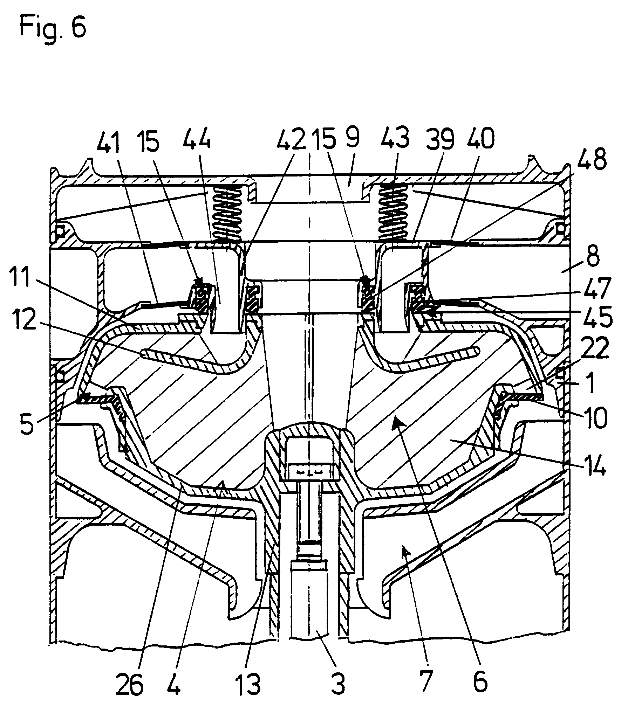

Die Ausführung nach Fig. 6 ist ähnlich der nach Fig. 1 ausgebildet. Unterschiedlich ist vor allem die Abdichtung zwischen dem Gehäuse 1 und dem Austragelement 4 bzw. zwischen dem Unterdruckbereich 6 und dem Normaldruckbereich 7. Die Dichtungen 15 weisen in Radialebenen liegende Dichtflächen 45 auf und setzen sich aus ringförmigen Gleitelementen 47, einen diese haltenden Träger 39, und den Träger 39 gegen das Austragelement 4 beaufschlagenden Druckfedern 43 zusammen, die sich am Gehäuse 1 abstützen. Die Gleitringe 47 bestehen aus einem reibungsarmen Kunststoff, wie Polytetrafluorethylen, oder aus keramischem Material, die gegen insbesondere metallische Anpreßringe des Austragelementes 4 gedrückt werden.

Der Träger 39 stellt einen Teil eines zentralen Saugluftauslaßrohres 42 dar und trennt einen Gemischeinlaßraum 44 vom Saugluftauslaßrohr 42. Der Träger 39 ist an zwei elastischen Ringen 40, 41 am Gehäuse 1 aufgehängt, sodaß er in axialer Richtung nachgiebig angeordnet ist und durch die Druckfedern 39 an die Dichtungen 15 angepreßt werden kann. Die elastischen Ringe 40, 41 liegen annähernd in Radialebenen, wobei der Ring 40 in der Trennwand zwischen dem Gemischeinlaßraum 44 und dem Saugluftauslaßrohr 42 und der Ring 41 in der Trennwand zwischen dem Gemischeinlaßraum 44 und dem Normaldruckbereich 7 angeordnet ist.

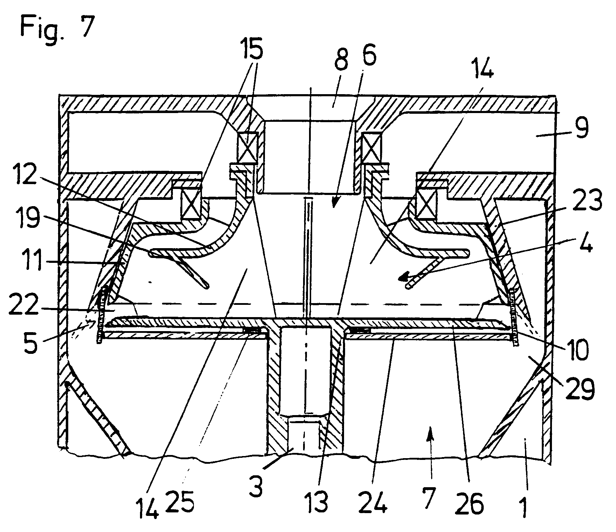

In der Ausführung nach Fig. 7 ist der rings um das Austragelement 4 verlaufende Auslaß 5 zwischen einer gehäusefesten Trennwand 23 und einer Bodenplatte 24 angeordnet, die das Austragelement 4 umgeben. Das Austragelement 4 weist einen von den beiden Behälterabschnitten 26,11 begrenzten Austrittsringspalt 22 am größten Durchmesser auf, der unmittelbar von einer sich schürzenartig ringförmig erstreckenden, jedoch nicht mitrotierenden Ventillippe der Rückschlagventilanordnung 10 bedeckt ist. Die aus geeignetem elastischen Material bestehende, in die Trennwand 23 eingesetzte, gegebenenfalls auch einstückig mit der Trennwand 23 ausgebildete Ventillippe bzw. Ventilschürze 10 wird in der gezeigten Schließstellung vom Unterdruck an die Bodenplatte 24 angedrückt. Ein aus dem über Umlenkflächen 19 des Behälterabschnittes 12 zwischen Einlaß 8 und Luftauslaß 9 geführten Saugluftstrom abgetrenntes fließfähiges Medium wird durch die Ventillippe bzw. Ventilschürze, wie strichliert gezeigt, nach außen gedrückt, sodaß das Material ringsum in den Normaldruckbereich 7 austreten kann. Zwischen dem unteren Behälterabschnitt 26 des angetriebenen Austragelementes 4 und der Bodenplatte 24 des Gehäuses 1 ist ein dichtendes Lager 25 vorgesehen.

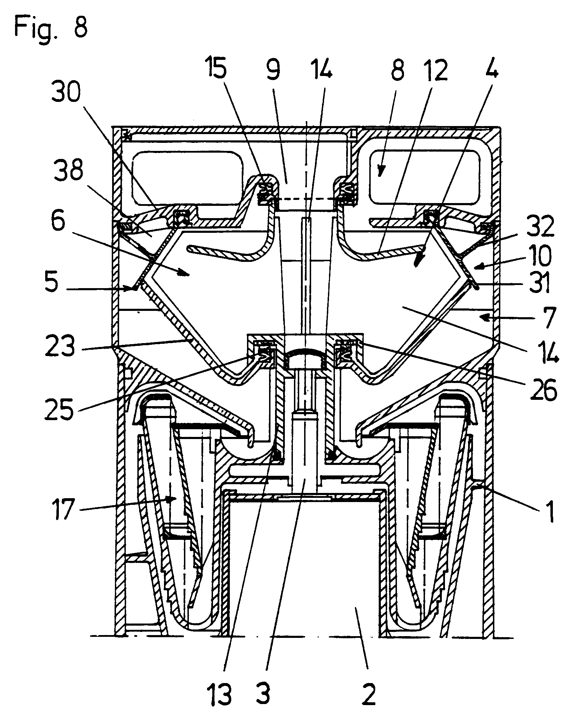

Auch in der Ausführung nach Fig. 8 ist die Rückschlagventilanordnung 10 gehäusefest angeordnet und überbrückt den Auslaß 5 zwischen einer gehäusefesten Trennwand 23 und einer Deckplatte 30. Die Rückschlagventilanordnung 10 umfaßt einen einstückigen, in die Deckplatte 30 eingespannten Ringkörper, der aus einem Dichtsteg 31 und einem Stützsteg 32 besteht. Da im Gegensatz zu den Ausführungen nach Fig. 4 und 5 die Rückschlagventilanordnung 10 nicht mitrotiert, sondern gehäusefest ist, dient der Stützsteg 32 in der Ausführung nach Fig. 8 insbesondere dazu, das Einsaugen des Dichtsteges 31 ins Innere zu verhindern. Weiters dient das freie Ende des Stützsteges 32 auch als Dichtung zwischen dem Gehäuse 1 und dessen Oberteil bzw. der Steckplatte 30. Das angetriebene Austragelement 4 weist von der Nabe 13 und dem auf einen Ring beschränkten unteren Abschnitt 26 hochstehende Stützstege 14 auf, die im flanschartigen Abschnitt 12 gehalten sind, der über die Gleitdichtung 15 an der Deckplatte 30 gelagert ist. Die Stützstege 14 weisen eine konvexe Außenkontur auf, d. h. der größte Durchmesser liegt im Auslaß 5 nahe des Anlagebereiches des Dichtsteges 31 an der Trennwand 23. Die Stützstege 14 können in jeder Ausführung auch schaufelartig gekrümmt sein.

## Patentansprüche

1. Verfahren zum Trennen transportierender Saugluft von einem transportierten, fließfähigen Medium, insbesondere von einem aus dem Mund eines Patienten abgesaugten Flüssigkeit-Feststoffgemisch in zahnärztlichen Abscheidern, wobei in einem Unterdruckbereich (6) das fließfähige Medium in Drehung versetzt, von der Saugluft getrennt und durch eine in Schließrichtung beaufschlagte Rückströmsperre (10) in einen Normaldruckbereich (7) ausgetragen wird, dadurch gekennzeichnet, daß das durch die Rotation beschleunigte Medium durch eine ringförmige, entgegen der Austragrichtung beaufschlagte Rückstromsperre allseits nach außen hindurchgedrückt wird.

2. Abscheider zum Trennen transportierender Saugluft von einem transportierten, fließfähigen Medium, insbesondere von einem dentalen Flüssigkeit-Feststoffgemisch, mit einem einen Unterdruckbereich (6) enthaltenden Gehäuse (1), das einen Gemischeinlaß (8), einen zu einer Saugpumpe führenden Luftauslaß (9), ein angetriebenes Austragelement (4) sowie einen Auslaß (5) für das fließfähige Medium in einen Normaldruckbereich (7) aufweist, der mit einer in Schließrichtung beaufschlagten Rückstromsperre versehen ist, dadurch gekennzeichnet, daß der Auslaß (5) für das fließfähige Medium und die in Schließrichtung beaufschlagte Rückströmsperre ringförmig rund um das Austragelement (4) angeordnet sind.

3. Abscheider nach Anspruch 2, dadurch gekennzeichnet, daß die Rückströmsperre durch eine Rückschlagventilanordnung (10) gebildet ist.

4. Abscheider nach Anspruch 2, dadurch gekennzeichnet, daß der Auslaß (5) und die Rückschlagventilanordnung (10) in einer das angetriebene Austragelement (4) umgebenden, gehäusefesten Trennwand (23) angeordnet sind.

5. Abscheider nach Anspruch 2 oder 3, dadurch gekennzeichnet, daß der Auslaß (5) und die Rückschlagventilanordnung (10) mitrotierend im angetriebenen Austragelement (4) angeordnet sind.

6. Abscheider nach Anspruch 4 oder 5, dadurch gekennzeichnet, daß die Rückschlagventilanordnung (10) durch eine ringförmige Ventilklappe gebildet ist.

7. Abscheider nach Anspruch 6, dadurch gekennzeichnet, daß die Ventilklappe sich im wesentlichen parallel zur Achse des Austragelementes (4) erstreckt.

8. Abscheider nach Anspruch 6, dadurch gekennzeichnet, daß die Ventilklappe annähernd in einer Radialebene liegt.

9. Abscheider nach Anspruch 7 oder 8, dadurch gekennzeichnet, daß die Ventilklappe aus elastischem Material besteht.

10. Abscheider nach Anspruch 4 oder 5, dadurch gekennzeichnet, daß die Rückschlagventilanordnung (10) mehrere rund um das Austragelement (4) verteilte Ventilklappen umfaßt.

11. Abscheider nach Anspruch 5, dadurch gekennzeichnet, daß die Rückschlagventilanordnung (10) zumindest einen sich im Auslaß (5) schräg nach außen erstreckenden und von außen gegen eine Anlagefläche des Austragelementes (4) beaufschlagten Steg (31) aufweist.

12. Abscheider nach Anspruch 11, dadurch gekennzeichnet, daß die Rückschlagventilanordnung (10) einen kegelstumpfförmigen Steg (31) aus einem elastischen Material aufweist.

13. Abscheider nach Anspruch 12 oder 13, dadurch gekennzeichnet, daß der Steg (31) durch einen Stützsteg (32) aus elastischem Material nach außen abgestützt ist.

14. Abscheider nach Anspruch 13, dadurch gekennzeichnet, daß der Stützsteg (32) C-förmig ausgebildet ist, wobei seine konkave Seite nach außen weist.

15. Abscheider nach Anspruch 13 oder 14, dadurch gekennzeichnet, daß der Steg (31) und der Stützsteg (32) einen Raum (38) einschließen, der über mindestens ein Loch (33) im Stützsteg (32) mit dem Normaldruckbereich (7) in Verbindung steht.

16. Abscheider nach Anspruch 13 oder 14, dadurch gekennzeichnet, daß der Steg (31) und der Stützsteg (32) einen Raum (37) einschließen, der über einen Kanal (36) mit dem Unterdruckbereich (6) in Verbindung ist.

17. Abscheider nach einem der Ansprüche 11 bis 16, dadurch gekennzeichnet, daß die Anlagefläche für den Steg (31) an einem Element (35) aus elastischem Material ausgebildet ist.

18. Abscheider nach einem der Ansprüche 2 bis 17, dadurch gekennzeichnet, daß das angetriebene Austragelement (4) durch einen im Unterdruckbereich (6) angeordneten Zentrifugenbehälter mit konvexer Erzeugenden gebildet ist, der am größten Durchmesser einen dem Auslaß (5) zugeordneten oder den Auslaß (5) bildenden Austrittsringspalt (22) aufweist.

19. Abscheider nach einem der Ansprüch 2 bis 17, dadurch gekennzeichnet, daß das angetriebene Austragelement (4) an der Nabe (13) einer im Normaldruckbereich (7) angeordneten Zentrifuge (17) vorgesehen ist, und der Auslaß (5) einen Eintrittsringspalt in die Zentrifuge (17) bildet.

20. Abscheider nach Anspruch 2, dadurch gekennzeichnet, daß zwischen dem Gehäuse (1) und dein angetriebenen Austragelement (4) zumindest eine Dichtung (15) vorgesehen ist, die ein am Gehäuse (1) elastisch abgestütztes, gegen das Austragelement (4) beaufschlagtes Gleitelement (47) aufweist.

21. Abscheider nach Anspruch 20, dadurch gekennzeichnet, daß das Gehäuse (1) ein Saugluftauslaßrohr (42) und einen das Saugluftauslaßrohr (42) umgebenden Gemischeinlaßraum (44) aufweist.

22. Abscheider nach Anspruch 21, dadurch gekennzeichnet, daß das Austragelement (4) in Verlängerung des Saugluftauslaßrohres (42) einen als nach außen gerichteten Leitflansch für das Gemisch ausgebildeten Abschnitt (12) aufweist.

23. Abscheider nach Anspruch 21 oder 22, dadurch gekennzeichnet, daß zwischen dem Saugluftauslaßrohr (42) und dem als Leitflansch dienenden Abschnitt (12) eine zweite Dichtung (15) vorgesehen ist, die ein am Gehäuse (1) elastisch abgestütztes, zweites Gleitelement (48) aufweist.

24. Abscheider nach einem der Ansprüche 20 bis 23, dadurch gekennzeichnet, daß jede Dichtung (15) in einer Radialebene liegende Dichtflächen (45) aufweist.

25. Abscheider nach Anspruch 20 oder 23, dadurch gekennzeichnet, daß das Gleitelement (47, 48) durch einen Ring aus einem reibungsarmen Material gebildet ist, der in einem am Gehäuse (1) elastisch aufgehängten Träger (39) angeordnet ist.

26. Abscheider nach Anspruch 25, dadurch gekennzeichnet, daß beide Gleitelemente (47, 48) in einem gemeinsamen Träger (39) angeordnet sind, an dem das Saugluftauslaßrohr (42) ausgebildet ist.

27. Abscheider nach Anspruch 25 oder 26, dadurch gekennzeichnet, daß der Träger (39) über mindestens eine vorgespannte Druckfeder (43) am Gehäuse (1) abgestützt ist.

## Claims

1. Methof for separating conveying suction air from a conveyed fluidic medium, in particular from a mixture of liquid and solids in dental separators, aspirated from the mouth of a patient, wherein the fluidic medium is set into rotation in a vacuum region (6), separated from the suction air, and discharged into a normal pressure region (7) through a backflow lock (10) which is biased in the locking direction, characterized in that the medium accelerated by the rotation is pushed outwardly all around through an annular backflow lock biased against the discharge direction.

2. Separator for separating conveying suction air from a conveyed fluidic medium, in particular from a dental mixture of liquid and solids, having a housing (1) containing a vacuum region (6), which housing has a mixture inlet (8), an air outlet (9) leading to a suction pump, a driven discharge element (4) as well as an outlet (5), provided with a backflow lock biased in the locking direction, for the fluidic medium into a normal pressure region (7), characterized in that the outlet (5) for the fluidic medium and the backflow lock which is biased in the locking direction are disposed annularly around the discharge element (4).

3. Separator of claim 2, characterized in that the backflow lock is formed by a check valve configuration (10).

4. Separator of claim 2, characterized in that the outlet (5) and the check valve configuration (10) are disposed in a partition (23) that is solid with the housing and surrounds the driven discharge element (4).

5. Separator of claim 2 or 3, characterized in that the outlet (5) and the check valve configuration (10) are disposed, rotating jointly, in the driven discharge element (4).

6. Separator of claim 4 or 5, characterized in that the check valve configuration (10) is formed by an annular valve flap.

7. Separator of claim 6, characterized in that the valve flap extends essentially parallel to the axis of the discharge element (4).

8. Separator of claim 6, characterized in that the valve flap is located approximately in a radial plane.

9. Separator of claim 7 or 8, characterized in that the valve flap comprises elastic material.

10. Separator of claim 4 or 5, characterized in that the check valve configuration (10) includes a plurality of valve flaps distributed around the discharge element (4).

11. Separator of claim 5, characterized in that the check valve configuration (10) has at least one ridge (31), extending obliquely outward in the outlet (5) and loaded from the outside against a bearing face of the discharge element (4).

12. Separator of claim 11, characterized in that the check valve configuration (10) has a truncated cone-shaped ridge (31) of an elastic material.

13. Separator of claim 12 or 13, characterized in that the ridge (31) is braced toward the outside by a support ridge (32) of elastic material.

14. Separator of claim 13, characterized in that the support ridge (32) is embodied in the form of a C, with its concave side pointing outward.

15. Separator of claim 13 or 14, characterized in that the ridge (31) and the support ridge (32) enclose a chamber (38), which communicates with the normal pressure region (7) via at least one hole (33) in the support ridge (32).

16. Separator of claim 13 or 14, characterized in that the ridge (31) and the support ridge (32) enclose a chamber (37), which communicates with the vacuum region (6) via a conduit (36).

17. Separator of one of claims 11-16, characterized in that the bearing face for the ridge (31) is embodied on an element (35) of elastic material.

18. Separator of one of claims 2-17, characterized in that the driven discharge element (4) is formed by a centrifuge container, disposed in the vacuum region (6), with a convex generatrix, which container has an annular outlet gap (22), associated with the outlet (5) or forming the outlet (5), at its largest diameter.

19. Separator of one of claims 2-17, characterized in that the driven discharge element (4) is provided at the hub (13) of a centrifuge (17) disposed in the normal pressure region (7), and the outlet (5) forms an annular inlet gap into the centrifuge (17).

20. Separator of claim 2, characterized in that at least one seal (15) is provided between the housing (1) and the driven discharge element (4), which seal has a sliding element (47) which is elastically braced at the housing (1) and which is loaded against the discharge element (4).

21. Separator of claim 20, characterized in that the housing (1) has a suction air outlet tube (42) and a mixture inlet chamber (44) surrounding the suction air outlet tube (42).

22. Separator of claim 21, characterized in that the discharge element (4) has a segment (12), embodied as an outward-oriented guide flange for the mixture, in the extension of the suction air outlet tube (42).

23. Separator of claim 21 or 22, characterized in that between the suction air outlet tube (42) and the segment (12) acting as a guide flange, a second seal (15) is provided, which has a second sliding element (48) elastically braced on the housing (1).

24. Separator of one of claims 20-23, characterized in that each seal (15) has sealing faces (45) located in a radial plane.

25. Separator of claim 20 or 23, characterized in that the sliding element (47, 48) is formed by a ring of a low-friction material, which is disposed in a carrier (39) elastically suspended from the housing (1).

26. Separator of claim 25, characterized in that both sliding elements (47, 48) are disposed in a common carrier (39), on which the suction air outlet tube (42) is embodied.

27. Separator of claim 25 or 26, characterized in that the carrier (39) is braced on the housing (1) via at least one prebiased compression spring (43).

## Revendications

1. Procédé pour séparer l'air aspiré transporteur et un produit fluide transporté, en particulier un mélange liquide-solide aspiré de la bouche d'un patient, dans des séparateurs dentaires, selon lequel le produit fluide est soumis à une rotation dans une zone à dépression (6), séparé de l'air aspiré et évacué vers une zone à pression normale (7) par un clapet anti-retour (10) contraint dans le sens de fermeture, caractérisé en ce que le produit accéléré par la rotation est poussé vers l'extérieur, de tous les côtés, par un clapet anti-retour annulaire contraint dans le sens oppose au sens d'évacuation.

2. Séparateur pour séparer l'air aspiré transporteur et un produit fluide transporté, en particulier un mélange liquide-solide dentaire, comprenant un boîtier (1) qui contient une zone à dépression (6) et qui comporte un orifice d'admission de mélange (8), un orifice de sortie d'air (9) menant à une pompe aspirante, un élément d'évacuation entraîné (4) et un orifice de sortie (5) pour le produit fluide vers une zone à pression normale (7), qui est pourvu d'un clapet anti-retour contraint dans le sens de fermeture, caractérisé en ce que l'orifice de sortie (5) pour le produit fluide et le clapet anti-retour contraint dans le sens de fermeture sont disposés suivant une forme annulaire tout autour de l'élément d'évacuation (4).

3. Séparateur selon la revendication 2, caractérisé en ce que le clapet anti-retour est formé par un dispositif formant soupape de retenue (10).

4. Séparateur selon la revendication 2, caractérisé en ce que l'orifice de sortie (5) et le dispositif formant soupape de retenue (10) sont disposés dans une cloison (23) solidaire du boîtier et entourant l'élément d'évacuation entraîné (4).

5. Séparateur selon la revendication 2 ou 3, caractérisé en ce que l'orifice de sortie (5) et le dispositif formant soupape de retenue (10) sont disposés pour tourner eux aussi dans l'élément d'évacuation entraîné (4).

6. Séparateur selon la revendication 4 ou 5, caractérisé en ce que le dispositif formant soupape de retenue (10) est formé par un clapet de soupape annulaire.

7. Séparateur selon la revendication 6, caractérisé en ce que le clapet de soupape s'étend globalement parallèlement à l'axe de l'élément d'évacuation (4).

8. Séparateur selon la revendication 6, caractérisé en ce que le clapet de soupape se trouve approximativement dans un plan radial.

9. Séparateur selon la revendication 7 ou 8, caractérisé en ce que le clapet de soupape se compose d'un matériau élastique.

10. Séparateur selon la revendication 4 ou 5, caractérisé en ce que le dispositif formant soupape de retenue (10) comprend plusieurs clapets de soupape répartis tout autour de l'élément d'évacuation (4).

11. Séparateur selon la revendication 5, caractérisé en ce que le dispositif formant soupape de retenue (10) comporte au moins une branche (31) qui s'étend en biais vers l'extérieur, dans l'orifice de sortie (5), et qui est contrainte de l'extérieur contre une surface d'application de l'élément d'évacuation (4).

12. Séparateur selon la revendication 11, caractérisé en ce que le dispositif formant soupape de retenue (10) comporte une branche tronconique (31) en matériau élastique.

13. Séparateur selon la revendication 12 ou 13, caractérisé en ce que la branche (31) est supportée vers l'extérieur par une branche de support (32) en matériau élastique.

14. Séparateur selon la revendication 13, caractérisé en ce que la branche de support (32) a la forme d'un C, son côté concave étant dirigé vers l'extérieur.

15. Séparateur selon la revendication 13 ou 14, caractérisé en ce que la branche (31) et la branche de support (32) couvrent un espace (38) qui communique avec la zone à pression normale (7) grâce à au moins un trou (33) ménagé dans la branche de support (32).

16. Séparateur selon la revendication 13 ou 14, caractérisé en ce que la branche (31) et la branche de support (32) couvrent un espace (37) qui communique avec la zone à dépression (6) grâce à un conduit (36).

17. Séparateur selon l'une des revendications 11 à 16, caractérisé en ce que la surface d'application prévue pour la branche (31) est formée sur un élément (35) en matériau élastique.

18. Séparateur selon l'une des revendications 2 à 17, caractérisé en ce que l'élément d'évacuation entraîné (4) est formé par un récipient de centrifugeuse qui est disposé dans la zone à dépression (6), qui présente une génératrice convexe et qui comporte, au niveau de son diamètre maximal, un passage annulaire de sortie associé à l'orifice de sortie (5) ou formant l'orifice de sortie (5).

19. Séparateur selon l'une des revendications 2 à 17, caractérisé en ce que l'élément d'évacuation entraîné (4) est prévu sur le moyeu (13) d'une centrifugeuse (17) disposée dans la zone à pression normale (7), et l'orifice de sortie (5) forme un passage annulaire d'entrée dans la centrifugeuse (17).

20. Séparateur selon la revendication 2, caractérisé en ce qu'il est prévu, entre le boîtier (1) et l'élément d'évacuation entraîné (4), au moins un joint d'étanchéité (15) qui comporte un élément de glissement (47) en appui élastiquement contre le boîtier (1) et contraint en direction de l'élément d'évacuation (4).

21. Séparateur selon la revendication 20, caractérisé en ce que le boîtier (1) comporte un tuyau de sortie d'air aspiré (42) et un espace d'admission de mélange (44) qui entoure le tuyau de sortie d'air aspiré (42).

22. Séparateur selon la revendication 21, caractérisé en ce que l'élément d'évacuation (4) comporte, dans le prolongement du tuyau de sortie d'air aspiré (42), une section (12) conçue comme une collerette de guidage dirigée vers l'extérieur, pour le mélange.

23. Séparateur selon la revendication 21 ou 22, caractérisé en ce qu'il est prévu, entre le tuyau de sortie d'air aspiré (42) et la section (12) servant de collerette de guidage, un second joint d'étanchéité (15) qui comporte un second élément de glissement (48) en appui élastique contre le boîtier (1).

24. Séparateur selon l'une des revendications 20 à 23, caractérisé en ce que chaque joint d'étanchéité (15) présente une surface d'étanchéité (45) s'étendant dans un plan radial.

25. Séparateur selon la revendication 20 ou 23, caractérisé en ce que l'élément de glissement (47, 48) est formé d'un anneau en un matériau à faible coefficient de frottement, anneau qui est disposé dans un support (39) suspendu de manière élastique au boîtier (1).

26. Séparateur selon la revendication 25, caractérisé en ce que les éléments de glissement (47, 48) sont tous deux disposés dans un support commun (39), sur lequel est formé le tuyau de sortie d'air aspiré (42).

27. Séparateur selon la revendication 25 ou 26, caractérisé en ce que le support (39) prend appui sur le boîtier (1) par l'intermédiaire d'au moins un ressort de compression précontraint (43).
